# EUROPEAN PATENT SPECIFICATION

(11) **EP 1 524 241 B1**
(45) Date of publication and mention of the grant of the patent: **26.08.2009**
(21) Application number: 04397013.6
(22) Date of filing: 17.06.2004
(51) Int. Cl.: C01B 17/66

(54) **A method for producing sodium dithionite to be used in the bleaching of mechanical pulp**
Verfahren zur Herstellung von Natriumdithionit zum Bleichen von mechanischer Pulpe
Méthode pour produire du dithionite de sodium à utiliser pour le blanchiment de pâte mécanique

(30) Priority: 19.06.2003 FI 20030928
(43) Date of publication of application: 20.04.2005
(73) Proprietor: Metso Power Oy, 33101 Tampere (FI)
(72) Inventor: Anttila, Mikko, 33900 Tampere (FI); Hämäläinen, Risto, 33820 Tampere (FI)
(74) Representative: Rönkkö, Taina Mirjam

(56) References cited:
- EP-A- 0 230 757
- DE-A1- 3 525 377
- US-A- 4 680 136
- US-A- 5 366 716
- US-A- 5 455 328

## Description

### Field of the invention

The invention relates to a method for producing sodium dithionite to be used in the bleaching of mechanical pulp according to the appended claim 1.

### Background of the invention

In a sulphate cellulose mill, there is a need for a variety of chemicals. In the mill, an aim is to recirculate the chemicals as much as possible, to keep the proportion of expensive purchase chemicals to a minimum. In particular, the chemical recovery cycle of the mill comprises a process for the recovery of cooking chemicals to bring the chemicals used in the pulping to such a form that they can be recycled in the pulping or other processes of the mill.

In the different steps of pulping and regeneration of the cooking chemicals, various compounds are produced which are harmful to the environment or in another way and whose emissions to the environment must be prevented. These include, for example, gaseous sulphur compounds which cause acid precipitation and odour problems. One such group is the odorous gases from the pulp mill. These include, for example, hydrogen sulphide, methylmerkaptan, dimethyl sulphide, and dimethyl disulphide. These gases are not only malodorous but in certain concentrations they are also combustible and even explosive. In the mill, they are generated as by-products from various process steps in as many as tens of different sources, for example pulping, the processing of black liquor, and the regeneration of cooking chemicals. Thus, in a modern pulp mill, the aim is to prevent emissions of odorous gases to the environment by collecting them and processing them in such a way that the above-mentioned disadvantages can be avoided. At the same time, the aim is to recover the sulphur contained in the odorous gases and to recycle them to the chemical recovery cycle and thereby to reduce the quantity of sulphurous purchase chemicals.

The sulphur contained in the sulphurous odorous gases is recovered by incinerating the odorous gases collected from the different process steps. It is known to incinerate odorous gases in a lime kiln or in a recovery boiler, wherein the sulphur contained in the odorous gases can be recycled to the chemical recovery cycle. Furthermore, it is known to incinerate odorous gases in a separate incineration plant and to scrub the thus generated flue gases with an alkaline sodium-containing scrubbing solution, such as sodium hydroxide, in a scrubber and to lead the solution, obtained in this way and containing sodium bisulphite or sodium sulphite, to green liquor. Furthermore, it is known from FI patent 96119 (and corresponding US patent 5,455,328) to absorb the SO₂ containing flue gases, resulting from the incineration of odorous gases, in an alkaline sodium solution in a scrubber. The sodium bisulphite solution obtained from the scrubber is led to soap acidification in a sulphate cellulose mill.

Sulphurous compounds also enter the chemical recovery cycle of the pulp mill from elsewhere, outside the chemical recovery cycle, for example with effluents from oxygen bleaching and with wood and water supplied into the process. The external sulphur addition into the chemical recovery cycle is substantial. Because the chemical recovery cycle is, at present, already very closed, this will result in the enrichment of sulphur in the chemical recovery cycle. Attempts have been made to eliminate the enrichment by removing sulphur from the cycle, for example, by incinerating odorous gases and by removing sulphur contained in them in the form of sodium bisulphite, wherein the solution, which contains sodium bisulphite, has been led to wastewater treatment. It is also known to use a limestone scrubber after the incineration of odorous gases to bind the sulphur contained in the flue gases to a calcium compound which can be discharged to wastewater treatment. Furthermore, it is known to incinerate odorous gases in the power boiler of a sulphate cellulose mill.

It is true that the above-mentioned methods are efficient in eliminating environmental problems caused by the odorous gases and in removing sulphur from the cycle in a controlled way. However, the disadvantage is an extra load on wastewater treatment and the wasting of a chemical which could be used or regenerated.

In the bleaching of mechanical pulp, it is possible to use various bleaching chemicals, such as ozone, hydrogen peroxide and sodium dithionite. It is also known, although not very common, to use a sodium bisulphite solution as such for bleaching. The reason for the insignificant use of sodium bisulphite is its poor bleaching efficiency.

Sodium dithionite Na₂S₂O₄ can be supplied into the bleaching process in different forms, for example as a solid powder which is dissolved before it is led into the bleaching process. Sodium dithionite is also available in a commercial solution which can be used as such for bleaching. One known alternative is to produce sodium dithionite in a bleaching chemical production plant of the mill itself. The starting materials used include, for example, sodium borohydride, sodium hydroxide and a suitable sulphur source, such as sulphur dioxide and/or sodium bisulphite in solid or dissolved form. Such a method for preparing sodium dithionite is disclosed *e.g.* in EP publication 587429. All the above-mentioned alternatives have the disadvantage that they use fully commercial purchase chemicals. Sodium dithionite is an expensive chemical, and purchasing it in a ready form increases the production costs of the pulp. It is thus less expensive to produce sodium dithionite in a bleaching chemical production plant of the mill itself than to purchase the ready chemical, but at present, only purchased chemicals are used in the production process, which raises the price of the produced chemical.

In addition, the publication US4680136 discloses a general method for producing sodium dithionite, which method employs sodium sulphite-bisulphite solution having liquid SO₂ added thereto.

### Brief description of the invention

The aim of the present invention is thus to provide a method for producing sodium dithionite to be used in the bleaching of mechanical pulp, to solve the above-mentioned problems. Thanks to the method, the valuable sulphur chemical, *i.e.* sodium bisulphite, removed from the sulphate cellulose mill can be utilized in the production of bleaching chemicals for mechanical pulp, wherein considerable financial savings are achieved in the chemical costs. Furthermore, thanks to the invention, it is possible to control the chemical recovery cycle of the sulphate cellulose mill, particularly the sulphur balance of it, wherein sulphur enriching in the chemical recovery cycle can be removed in an easy and safe way.

To attain this purpose, the method according to the invention is primarily characterized in what will be presented in the characterizing part of the independent claim 1.

The other, dependent claims will present some preferred embodiments of the invention.

The invention is based on the idea that a sodium bisulphite solution made from the odorous gases of a sulphate cellulose mill is used in the production of bleaching chemicals for mechanical pulp. The sulphurous odorous gases of the pulp mill are incinerated in an incinerator for odorous gases, wherein the resulting product is primarily sulphur dioxide. The sulphur dioxide is scrubbed in a way known as such in a scrubber with sodium hydroxide as the scrubbing solution, wherein sodium bisulphite is produced as a result. The sodium bisulphite solution thus produced is not lead to the chemical recovery cycle of the sulphate cellulose mill itself or discharged as a waste chemical, but it is led to the production of a bleaching chemical for mechanical pulp, *i.e.* sodium dithionite. In this way, sulphur can be removed easily and simply from the chemical recovery cycle of the sulphate cellulose mill, and advantages are simultaneously achieved in the process technology of the sulphate cellulose mill. In the production of bleaching chemicals for mechanical pulp, it is also advantageous to use the sodium bisulphite solution which has been produced in this way and which can be used to compensate for sodium bisulphite or sulphur dioxide water to be purchased from elsewhere. Consequently, thanks to the invention, it is no longer necessary to use expensive purchase chemicals but it is possible to utilize a usable by-product from the process of the sulphate cellulose mill.

The invention thus applies the surprising idea to combine the chemicals production of two pulp producing mills with different technical processes and, on the other hand, the demand for chemicals. In other words, the sulphate cellulose mill produces, from excess sulphur developed in the mill, a chemical which can be used by a mechanical pulp producing mill in the production of bleaching chemicals.

### Brief description of the drawings

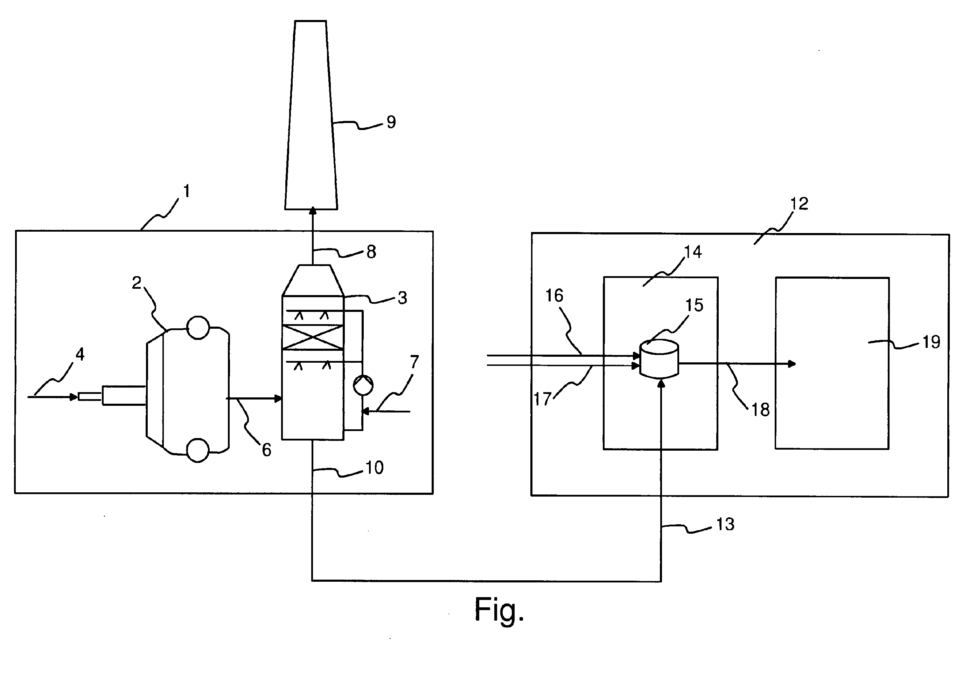

In the following, the invention will be described in more detail with reference to the appended drawing which shows, schematically, an application according to the invention for producing sodium dithionite to be used in the bleaching of mechanical pulp.

### Detailed description of the invention

The figure shows a system for processing odorous gases in a sulphate cellulose mill 1, comprising an odorous gas incineration plant 2 and a gas scrubber 3 for processing flue gases developed in the combustion plant. The sulphate cellulose mill also comprises a number of other processes relating to the production and processing of pulp, as well as the treatment of solid, gaseous and liquid waste developed in connection with the production, which processes are not shown for reasons of clarity.

The odorous gases 4 which are produced in the sulphate cellulose mill and which contain at least one of the following compounds: hydrogen sulphite (H₂S), methylmerkaptan (CH₃SH), dimethyl sulphide ((CH₃)S) and dimethyl disulphide ((CH₃)₂)S₂, are collected from their generation points in different parts of the pulp mill and are led to an incineration plant 2 for incineration. The incineration plant can be, as presented in this example, an odour gas incinerator with steam boiler made of membrane tubes, *i.e*. a steam boiler, from which the developed steam is conducted to be used elsewhere in the pulp mill. In the incineration plant, the sulphur in the odorous gases reacts with oxygen in the combustion air and forms *e.g.* gaseous sulphur dioxide (SO₂).

The sulphur dioxide containing flue gases 6 are led to the gas scrubber 3. In the scrubber 3, the flue gases react with the alkaline sodium containing scrubbing solution 7, *i.e.* sodium hydroxide solution (NaOH), supplied into the scrubber, resulting in a sodium bisulphite solution (NaHSO₃). The net reaction in the scrubber is the following:

(1) SO₂ + NaOH → NaHSO₃

The scrubbed flue gases 8 are discharged into a chimney 9. The odorous gas combustion plant and the gas scrubber as well as their operation are known as such for a person skilled in the art, wherein they are not described in more detail in this context. The sodium bisulphite solution 10 produced in the scrubber is discharged from the scrubber, from its lower part, and is transferred to a pulp mill 12 which produces pulp by the method of mechanical pulping.

The sodium bisulphite solution is transferred via a line 13 to the production process 14 of the bleaching chemical, *i.e.* sodium dithionite, in the pulp mill 12. The figure shows, in a simplified manner, one method for producing sodium dithionite, wherein sodium bisulphite (NaHSO₃), sodium hydroxide (NaOH) and sodium borohydride (NaBH₄) are led to the reactor 15 via lines 13, 16 and 17, respectively. Sodium dithionite is formed according to the following reaction equation:

(2) NaBH₄ + 3.2 NaOH + 4.8 NaHSO₃ + 3.2 SO₂ → 4Na₂S₂O₄ + NaBO₂ + 6H₂O

The process of producing sodium dithionite is known as such for a person skilled in the art, and it will thus not be described in more detail in this context. The equipment for producing sodium dithionite also comprises various containers, pumps and pipeworks as well as means for adjusting and controlling the process, which are not presented for reasons of clarity.

The sodium dithionite 18 produced in the process 14 of producing sodium dithionite is led to the process 17 to be used in bleaching of mechanical pulp.

The following example illustrates the advantages of the invention:
In dithionite bleaching, the normal supply of the bleaching agent is 0.5 to 1.0 % of Na₂S₂O₄ per ton of pulp. If the production of the mill is 1000 tons of pulp per day and the consumption of sodium dithionite is 1.0 %, it means 10 tons of sodium dithionite per day. This quantity includes 3.7 tons of sulphur per day, of which quantity at least a part can be supplied as NaHSO₃ chemical from a sulphate cellulose mill.

In a modern sulphate cellulose mill, the output of sulphur with the odorous gases is 3 kg per ton of pulp. In a mill which produces 1233 tons of pulp per day, 3.7 tons of sulphur is discharged with the odorous gases.

The invention is not intended to be limited to the above embodiment presented as an example, but the invention is intended to be applied widely within the scope of the inventive idea as defined in the appended claims.

## Claims

1. A method for producing sodium dithionite (Na₂S₂O₄) to be used in the bleaching of mechanical pulp, in which production sodium bisulphite (NaHSOₐ) that is formed by scrubbing sulphur dioxide containing (SO₂) gases is used, **characterized in that** the sodium bisulphite to be used is produced in a sulphate cellulose mill (1) by incinerating odorous gases from the mill in an incineration plant (2) and scrubbing the flue gases produced in the incineration with a solution of sodium hydroxide (NaOH), wherein sulphur is removed from the chemical recovery cycle of the sulphate cellulose mill (1) as sodium bisulphite formed from the odorous gases and that the produced sodium bisulphite is transferred to a mechanical pulp producing mill (12) for the production (14) of sodium dithionite.

2. The method according to claim 1, **characterized in that** odorous gases from a sulphate cellulose mill are collected from different locations in the pulp mill and they are transferred for incineration.

3. The method according to claim 1 or 2, **characterized in that** the odorous gases to be incinerated contain at least one of the following compounds: hydrogen sulphide (H₂S), methylmerkaptan (CH₃SH), dimethyl sulphide ((CH₃)S) and dimethyl disulphide ((CH₃)₂)S₂.

4. The method according to any of the claims 1 to 3, **characterized in that** the odorous gases are incinerated in an incineration plant (2).

5. The method according to any of the claims 1 to 4, **characterized in that** the flue gases developed as a result from the incineration of the odorous gases contain at least gaseous sulphur dioxide (SO₂),

## Patentansprüche

1. Verfahren zur Herstellung von Natriumdithionit (Na₂S₂O₄), das beim Bleichen von Holzstoff verwendet werden soll, wobei bei dieser Herstellung Natriumhydrogensulfit (NaHSO₃) verwendet wird, das beim Waschen von Schwefeldioxid (SO₂) enthaltenden Gasen gebildet wird, **dadurch gekennzeichnet, dass** das zu verwendende Natriumhydrogensulfit in einer Sulfatzellstoff-Mühle (1) hergestellt wird, indem geruchsbelastete Gase aus der Mühle in einer Verbrennungsanlage (2) verbrannt und die bei der Verbrennung produzierten Verbrennungsgase mit einer Natriumhydroxidlösung (NaOH) **gewaschen werden, wobei Schwefel aus dem chemischen** Rückgewinnungszyklus der Sulfatzellstoff-Mühle (1) als Natriumhydrogensulfit abgezogen wird, das aus den geruchsbelasteten Gasen gebildet wurde, und dass das hergestellte Natriumhydrogensulfit in eine Holzstoff produzierende Mühle (12) zur Herstellung (14) von Natriumdithionit überführt wird.

2. Verfahren nach Anspruch 1, **dadurch gekennzeichnet, dass** geruchsbelastete Gase aus einer Sulfatzellstoff-Mühle von verschiedenen Stellen in der Holzstoffmühle gesammelt werden und sie zur Verbrennung überführt werden.

3. Verfahren nach Anspruch 1 oder 2, **dadurch gekennzeichnet, dass** die zu verbrennenden geruchsbelasteten Gase mindestens eine der folgenden Verbindungen enthalten: Schwefelwasserstoff (H₂S), Methylmerkaptan (CH₃SH), Dimethylsulfid ((CH₃)S) und Dimethyldisulfid ((CH₃)₂S₂).

4. Verfahren nach einem der Ansprüche 1 bis 3, **dadurch gekennzeichnet, dass** die geruchsbelasteten Gase in einer Verbrennungsanlage (2) verbrannt werden.

5. Verfahren nach einem der Ansprüche 1 bis 4, **dadurch gekennzeichnet, dass** die als Folge der Verbrennung der geruchsbelasteten Verbrennungsgase mindestens gasförmiges Schwefeldioxid (SO₂) enthalten.

## Revendications

1. Procédé pour produire du dithionite de sodium (Na₂S₂O₄) destiné à être utilisé dans le blanchiment de pâte mécanique, dans lequel on utilise du bisulfite de sodium (NaHSO₃) qui est formé par lavage de gaz contenant du dioxyde de soufre (SO₂), **caractérisé en ce que** le bisulfite de sodium utilisé est produit dans une usine de production de cellulose au sulfate (1) par incinération des gaz odorants de l'usine dans une installation d'incinération (2) et par lavage des gaz de fumée produits dans l'incinération avec une solution d'hydroxyde de sodium (NaOH), où le soufre est éliminé du cycle de récupération chimique de l'usine de production de cellulose au sulfate (1) sous forme de bisulfite de sodium formé à partir des gaz odorants et **en ce que** le bisulfite de sodium produit est transféré dans une usine (12) de production de pâte mécanique pour la production (14) de dithionite de sodium.

2. Procédé selon la revendication 1, **caractérisé en ce que** les gaz odorants d'une usine de production de cellulose au sulfate sont récupérés dans différents sites de l'usine de pulpe et qu'ils sont transférés pour une incinération.

3. Procédé selon la revendication 1 ou 2, **caractérisé en ce que** les gaz odorants à incinérer contiennent au moins un des composés suivants : sulfure d'hydrogène (H₂S), méthylmercaptan (CH₃SH), diméthylsulfure ((CH₃)S) et diméthyldisulfure ((CH₃)₂)S₂.

4. Procédé selon l'une quelconque des revendications 1 à 3, **caractérisé en ce que** les gaz odorants sont incinérés dans une installation d'incinération (2).

5. Procédé selon l'une quelconque des revendications 1 à 4, **caractérisé en ce que** les gaz de fumée dégagés comme résultat de l'incinération de gaz odorants contiennent au moins du dioxyde de soufre gazeux (SO₂).
